# EUROPEAN PATENT APPLICATION

(11) **EP 2 253 852 A1**
(43) Date of publication of application: **24.11.2010**
(21) Application number: 09006753.9
(22) Date of filing: 19.05.2009
(51) Int. Cl.: F04D 25/06, F04D 29/62, F04D 29/058

(54) **Compressor assembly with an active magnetic bearing**

(71) Applicant: Siemens Aktiengesellschaft, 80333 München (DE)
(72) Inventor: Korenblik, Gerard, 7478 BL Diepenheim (NL)

(57) **Abstract**

A compressor assembly having a rotor being rotatably disposed by at least one bearing at each axial end section of the rotor and an active magnetic bearing located in a middle section, wherein the rotor is circumferentially enclosed by the active magnetic bearing, **characterised in that** the active magnetic bearing comprises at least two parts which are separable such that the at least two parts are removable in a radial direction from the rotor is disclosed. The active magnetic bearing is separable into at least two parts, or into four parts of comparable size or symmetrically into sections of comparable size and shape. The active magnetic bearing is separable along planes extending in radial direction from the axis of the rotor.

## Description

The present invention relates to a compressor assembly according to the preamble of claim 1.

A compressor assembly usually comprises a rotor. The rotor is mounted using a plurality of bearings placed at each axial end sections of the rotor. One example of such a compressor assembly is known from US7156627. Therein, a compressor unit disclosed includes a rotor, the rotor being mounted using magnetic bearings. The rotor is mounted using two radial magnetic bearings which are arranged at both axial end sections of the rotor. The assembly also includes one axial magnetic bearing arranged in the vicinity of one of the radial bearings to support the rotor.

High speed rotating structures such as various motors, generators, turbines and so on, are provided with bearings, interfacing between the stationary and rotating members. Generally, Active Magnetic Bearings (AMBs) are of high importance as they have great potential to improve the efficiency of rotating machinery by reducing or eliminating the complexity of bearing lubrication systems, enabling high rotational speeds, and providing active means of supporting power in complex rotating assemblies.

For compressor assemblies with a long rotor it is known to have an additional bearing in the middle section in addition to the bearings in the end sections. Manufacturing and maintenance of these compressor assemblies are difficult, since the bearing encloses the rotor circumferentially close to the axis of the rotor and therefore the bearing will be blocked in an axial direction to both sides of the bearing by other parts of the rotor, such as the motor and the compressor blades.

It is an object of the invention to improve maintenance flexibility of the compressor assemblies with an additional AMB at the middle section of the rotor.

This problem is solved by a compressor assembly according to claim 1.

An AMB which is separable into at least two parts such that they can be removed in a radial direction from the rotor can easily be inserted to and removed from the middle section of a compressor assembly. Therefore a compressor assembly with such an AMB, which can be called split AMB, is easy to manufacture and to maintain.

In a preferred embodiment, the active magnetic bearing is separable into two parts of comparable size or is separable into four parts of comparable size or to a plurality of parts of comparable size. This structure is easy to manufacture and also provides greater maintenance flexibility.

In a preferred embodiment, the active magnetic bearing is separable symmetrically into a plurality of sections of comparable size and shape. This improves maintenance functionality and increases the stability of the arrangement.

In a preferred embodiment herein, the active magnetic bearing is separable into different parts along planes extending in radial direction from the axis of the rotor. This helps to create a simple arrangement which is easy to manufacture and maintain.

According to a preferred embodiment herein, the active magnetic bearing comprises fixing means to join the at least two parts together. This helps to rigidly hold the parts of the active magnetic bearing in the rotor supporting position and prevents parts from slipping relative to one another.

According to another preferred embodiment herein, the compressor comprises a compressor and a motor and wherein the active magnetic bearing is located in an axial direction between the compressor and the motor. This enables precise location of the AMB in the assembly as there is space available for its placement at this section without affecting the operation of the rotor or other related parts.

According to another preferred embodiment, the motor and the compressor of the compressor assembly are enclosed in a single gas-tight casing such that the motor and compressor are sharing a single common rotor, which is made of one piece of a material. This helps to create a positive impact on the rotor dynamic aspect of the three bearing arrangement, which improves the problematic long shaft on the one hand and the heaviness of the electric motor on the other hand.

According to yet another preferred embodiment, each of the at least two parts comprise a sensor for sensing the distance of the rotor from the active magnetic bearing in one direction. Thereby, if only one sensor fails, the corresponding pairs working in conjunction only has to be removed to replace the sensor.

According to yet another preferred embodiment, the sensors provide an output signal indicative of the radial displacement of the rotor along the axis of rotation. This helps to detect the deflection of the rotor relative to the rotational axis in the region of the bearing.

The present invention is further described hereinafter with reference to illustrated embodiments shown in the accompanying drawings, in which:
- FIG 1: illustrates a cross sectional view of a compressor assembly depicting an active magnetic bearing located in the middle section of the rotor according to an embodiment herein;
- FIG 2A: illustrates a cross sectional view of the active magnetic bearing of FIG 1, according to an embodiment herein;
- FIG 2B: illustrates a perspective view of the active magnetic bearing of FIG.2A;
- FIG 3: illustrates a cross sectional view of an alternate embodiment of the active magnetic bearing of FIG 1;
- FIG 4: illustrates a cross sectional view of an alternate embodiment of the active magnetic bearing of FIG 1;
- FIG 5: illustrates a cross sectional view of an alternate embodiment of the active magnetic bearing shown in FIG 1; and
- FIG 6: illustrates a cross sectional view of an alternative embodiment of the compressor assembly according to the invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

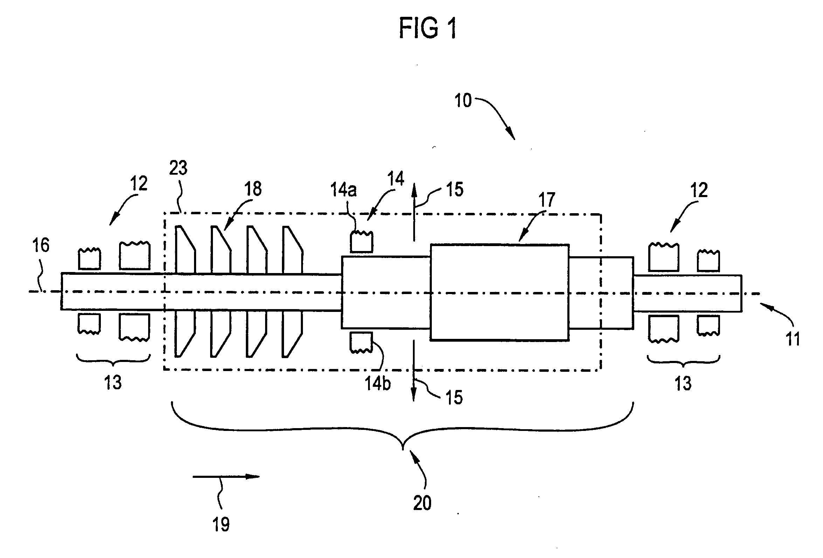

FIG 1 illustrates a cross sectional view of a compressor assembly 10 depicting an active magnetic bearing 14 located in the middle section 20 of the rotor 11 according to an embodiment herein. Here the middle section 20 refers to the intermediate section of the rotor 11 between the two axial end sections 13. The compressor assembly 10 includes a rotor 11, a plurality of bearings 12 disposed at each axial end section 13 of the rotor 11, a motor 17, a compressor 18 and an active magnetic bearing 14 located in the axial direction indicated by the arrow 19 between the motor 17 and compressor 18 of the compressor assembly 10. The plurality of bearings 12 at the axial end sections 13 include magnetic bearings and back up bearings for the magnetic bearings for supporting the rotor 11. The active magnetic bearing 14 herein is a split bearing generally in the shape of a ring which circumferentially encloses the rotor 11 at the middle section 20. The active magnetic bearing 14 comprises of at least two parts 14a, 14b which are separable in such a way that the two parts 14a, 14b are removable in a radial direction indicated by the arrow 15 in FIG 1 from the rotor 11. The compressor assembly 10 referred herein can be a gas compressor.

The parts 14a, 14b of AMB 14 in combination have an angular extent close to 360° so as to surround substantially the entire circumference of the rotor 11. The parts 14a, 14b provide a supporting surface centered to resist the force applied by the rotor 11.

The motor and the compressor of the compressor assembly are enclosed in one common gas-tight casing 23. The motor and the compressor are sharing one common rotor, which is advantageously of one piece of material. This improves the problematic long shaft on the one hand and the heaviness of the electric motor on the other hand. The possibility to locate the bearing between the compressor and the motor eliminates the disadvantage of having the bearing in the middle of the rotor where the shaft diameter is maximum. This has a large impact on rotor dynamics.

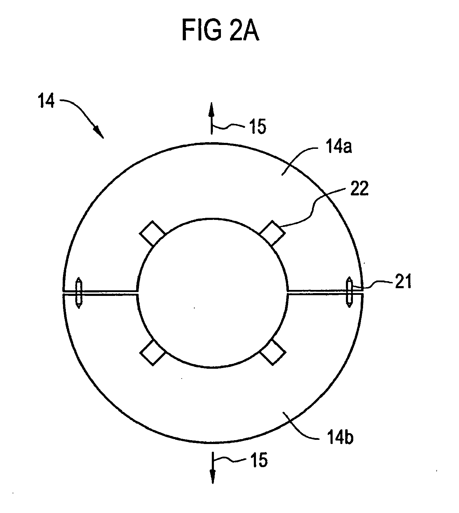

FIG 2A illustrates a cross-sectional view of the active magnetic bearing of FIG 1, according to an embodiment herein. The active magnetic bearing 14 is generally ring shaped which can be separated into at least two parts 14a, 14b such that the at least two parts 14a, 14b are removable in a radial direction from the rotor 11 indicated by the arrow 15. The active magnetic bearing 14 includes a fixing means 21 to join the at least two parts 14a, 14b together such that they closely receive the rotor 11 to support it and to allow it to rotate freely. The fixing means 21 is used to rigidly hold the two parts 14a, 14b of the split AMB 14 in a rotor supporting position adjacent to the rotor 11 in opposite directions. The fixing means 21 supports the AMB parts 14a, 14b in a radial direction by means of a cylindrical bore or rim to handle the radial loading induced by radial rotor 11 movements. The active magnetic bearing 14 can be easily disassembled by removing the fixing means 21 and the parts 14a, 14b of the bearing 14 can be removed from the compressor assembly 10 by laterally separating the halves. The fixing means 21 can be a pair of screw, bolt, spreaders or any other suitable fastening means. The split AMB 14 having co-operating parts that can be separated enables the split AMB 14 to be removed without removing the rotor 11 from the compressor assembly 10. The active magnetic bearing 14 exerts magnetic pulling force on the rotor 11, thereby stabilizing the rotor 11 at its axis 16 of rotation.

Each of the at least two parts 14a, 14b of the bearing 14 comprise a sensor 22 for sensing the distance of the rotor 11 from the split AMB 14 in one direction. The sensors 22 are selectively positioned within each part 14a, 14b of active magnetic bearing 14 to provide an output signal indicating the rotation frequency and the instantaneous rotation position of the rotor 11. The sensors 22 transmit the output signal indicating the radial displacement of the rotor 11 along the axis 16 of rotation to a control device (not shown). The control device then determines a control signal as a function of the detected instantaneous rotation position of the rotor 11 and transmits the corresponding control signal to the split bearing 14 to control the magnetic power. Here, the control signals are determined such that the active magnetic bearing 14 counteracts the radial deflections of the rotor 11.

The active magnetic bearing 14 preferably is made of a corrosion resistant material such as steel or any other material capable of withstanding the high forces induced by rotor rotation. The active magnetic bearing 14 allows the rotor 11 to rotate freely, eliminates the need for lubrication, and resists the corrosive elements to which it may be exposed.

As the active magnetic bearing 14 is split into parts 14a, 14b, it enables the bearing 14 to be replaced without removing the rotor 11 from the compressor assembly 10. The parts 14a, 14b of the bearing 14 can be inspected without disturbing any of the components mounted along the length of the rotor 11. Moreover, it is possible to replace only the part which is fatigued to a point where it can no longer be relied upon.

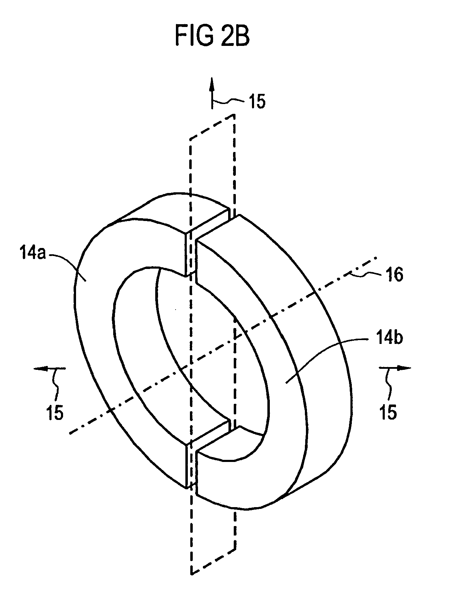

FIG 2B illustrates a three dimensional view of the active magnetic bearing of FIG 2A. The active magnetic bearing 14 herein is split into two identical parts 14a, 14b, each encompassing 180° of the rotor 11 circumference. The active magnetic bearing 14 is placed such that the parts 14a, 14b are separable along planes extending in radial direction indicated by the arrow 15 from the axis 16 of the rotor 11. When the two parts 14a, 14b are assembled together, the bearing parts 14a, 14b meet in a plane which substantially coincides with the plane through the geometric centre of the rotor 11. As shown in FIG. 2A, the active magnetic bearing 14 may be easily disassembled by removing the fixing means 21 and then separating the halves along the radial axis shown by arrow 15. The active magnetic bearing 14 herein has a simple construction, requiring only a pair of fixing means 21, for instance, screws, to hold the parts 14a, 14b together.

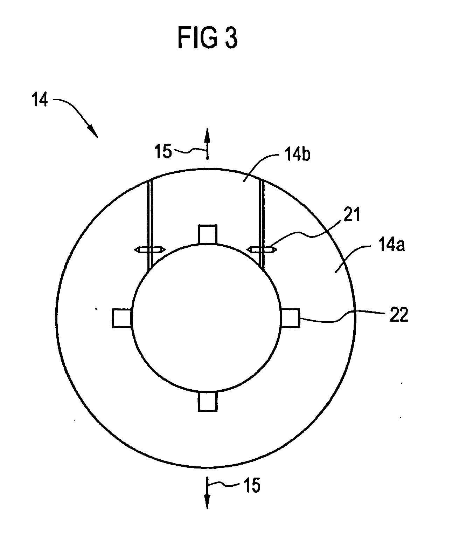

FIG 3 illustrates a cross sectional view of an alternate embodiment of the active magnetic bearing of FIG 1. The active magnetic bearing 14 is separated into two non equal parts 14a, 14b wherein at least one part 14a is substantially C-shaped. Here the part 14a is large enough such that after its removal from the compressor assembly it leaves an opening in the AMB through which the rotor can pass through in the radial direction 15.

The parts 14a, 14b are not required to surround the entire circumference of the rotor 11. It is only necessary that the bearing sections 14a, 14b should be sufficient to support the rotor 11 in the direction of the load. This may be, for example, 350°, 340°or 330°, as compared to the 360° of the complete rotor 11 circumferences. The active magnetic bearing 14 includes a pair of fixing means 21 for securely holding the parts 14a, 14b around the rotor 11. The parts 14a, 14b when joined together, form an annular cavity to hold the rotor 11. Each part of the active magnetic bearing 14 includes a sensor 22 for sensing displacements of the rotor 11 in radial direction indicated by arrow 15 or axial direction indicated by arrow 19 in FIG 1, from a normal centered position. The fixing means 21 is preferably made of a strong, rigid material such as galvanized steel.

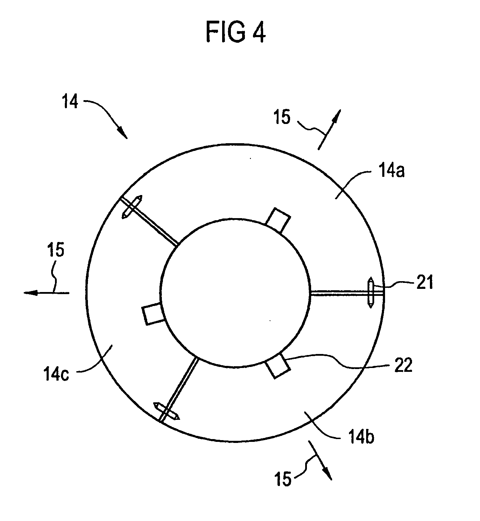

FIG 4 illustrates another cross sectional view of the active magnetic bearing of FIG 1. The active magnetic bearing 14 is separated into three parts 14a, 14b, 14c of equal size and shape which when taken together substantially surround or encircle the rotor. The three parts 14a, 14b, 14c are held in place by using a plurality of fixing means 21, which helps to retain the active magnetic bearing 14 rigidly circumferential to the rotor 11. As each of parts is fitted separately, the weight of the largest of these three parts is much less than as compared to other solid bearing. This helps easier handling and may completely eliminate the need for lifting equipments to disassemble the parts 14a, 14b, 14c, which would be necessary in the case of a solid bearing. Further, each of the three parts 14a, 14b, 14c includes at least one sensor 22. These sensors 22 measure the distance of the rotor 11 from the active magnetic bearing 14 in one direction.

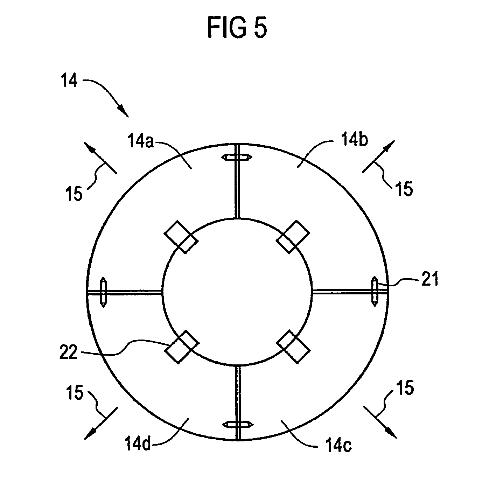

FIG 5 illustrates a cross sectional view of an alternate embodiment of the active magnetic bearing shown in FIG 1. The active magnetic bearing 14 herein is separated into four parts 14a, 14b, 14c, 14d of comparable size and shape. The split AMB 14 is generally a permanent magnetic ring which can be separated into four parts 14a, 14b, 14c, 14d of comparable size and shape. The four parts 14a, 14b, 14c, 14d are separable along planes extending in radial direction indicated by the arrow 15 from the axis 16 of the rotor 11. When the split active magnetic bearing 14 is located in the compressor assembly 10, the four parts 14a, 14b, 14c, 14d are arranged symmetrically so that the magnetic forces between the parts 14a, 14b, 14c, 14d of the split AMB 14 cooperate to generally centre the bearing 14 in the assembly 10 near the axis 16 of rotation of the rotor 11. The AMB 14 can also be formed with axially alternating parts 14a, 14b, 14c, 14d to restrict axial movement of the AMB 14 relative to the assembly 10. The fixing means 21 is used to rigidly hold the four parts 14a, 14b, 14c, 14d of the AMB 14 in the shaft supporting position adjacent to the rotor 11 so that it forms a circular structure to adapt the rotor shaft. The fixing means 21 provides stability to the bearing 14 by firmly holding the parts 14a, 14b, 14c, 14d, thereby preventing the parts from slipping in accordance with the rotational forces. The fixing means 21 can be screws, bolts, spreaders or any other suitable fastening means. The AMB 14 having co-operating parts 14a, 14b, 14c, 14d can be separated enables the AMB 22a, 22b, 22c, 22d to be removed according to requirements without removing the rotor 11 from the assembly 10.

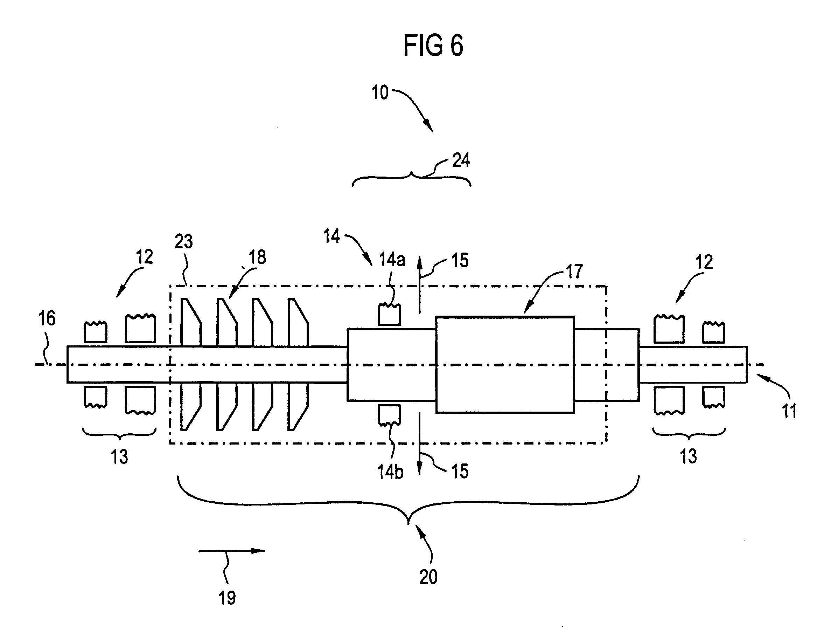

FIG 6 illustrates a cross sectional view of an alternative embodiment of the compressor assembly according to the invention. The active magnetic bearing 14 can also be positioned at any location along the middle section 20 of the rotor 11 between the compressor 18 and the motor 17, as this region includes spacing to position the AMB 14 without distracting the surrounding machineries. Here, the AMB 14 is placed within a region 24 centered in the middle between the two end sections 13, wherein the region 24 has a length along the axis 16 of the rotor 11 of one third of the distance between both end sections 13. The active magnetic bearing 14 is placed such that when, disassembled the parts 14a, 14b can be separated out from the assembly in a radial direction 15 without causing any damage to the surrounding components. Also, the region include place for right positioning of the AMB 14 for providing axial support to the rotor 11.

The embodiment herein provides an active magnetic bearing in the form a split bearing assembly having a simple construction requiring only a fixing means to hold the different parts together. The AMB in accordance with the embodiment is relatively easy to install and remove from the structure, and is thereby time reducing.

The gas tight casing described in the embodiment herein enables to build seal less compressors, which might expose the motor to the process gas. This has significant advantage in subsea application or compression of toxic gas. Here, the gas tight casing includes and inlet and outlet for passing the process gas, but no rotor seal to the surroundings of the rotor.

The embodiment herein enables to optimize a simple rotor design, designing of compact rotating assemblies with robust rotor design, limits maintenance complexity as compared to existing active magnetic bearing assembly and the like. The embodiment provides the provision of changing only the shape and/or size of the various elements of the active magnetic bearing in order to accommodate a particular device on a particular environment. Moreover, it is possible to easily replace existing standard AMBs generally used near the middle section for additional rotor support with those of the present invention with a minimal expenditure of cost, effort, and time.

In addition to the application in the gas compressors, the embodiment herein can be used in other structures such as steam compressors, gas turbines, steam turbines, or the like, where the robustness of the design is to be improved and the maintenance complexity need to be reduced.

## Claims

1. A compressor assembly (10) having a rotor (11) being rotatably disposed by at least one bearing (12) at each axial end section (13) of the rotor (11) and an active magnetic bearing (14) located in a middle section (20), wherein the rotor (11) is circumferentially enclosed by the active magnetic bearing (14), **characterised in that** the active magnetic bearing (14) comprises at least two parts (14a, 14b, 14c, 14d) which are separable such that the at least two parts (14a, 14b, 14c, 14d) are removable in a radial direction (15) from the rotor (11).

2. The compressor assembly (10) according to claim 1, **characterised in that** the active magnetic bearing (14) is separable into two parts (14a, 14b, 14c, 14d) of comparable size.

3. The compressor assembly (10) according to claim 1, **characterised in that** the active magnetic bearing (14) is separable into four parts (14a, 14b, 14c, 14d) of comparable size.

4. The compressor assembly (10) according to any of the claims 1 to 3, **characterised in that** the active magnetic bearing (14) is separable symmetrically into sections of comparable size and shape.

5. The compressor assembly (10) according to any of the claims 1 to 4, **characterised in that** the active magnetic bearing (14) is separable along planes extending in radial direction (15) from the axis (16) of the rotor (11).

6. The compressor assembly (10) according to any of the claims 1 to 5, **characterised in that** the active magnetic bearing (14) comprises a fixing means (21) to join the at least two parts (14a, 14b, 14c, 14d) together.

7. The compressor assembly according to claim 6, **characterised in that** the fixing means (21) is at least one of a bolt, a screw, a cramp and a spreader.

8. The compressor assembly (10) according to any of the claims 1 to 7, **characterised in that** the compressor assembly (10) comprises a motor (17) and a compressor (18) of the compressor assembly (10) and wherein the active magnetic bearing (14) is located in an axial direction (19) between the compressor (17) and the motor (16).

9. The compressor assembly (10) according to any of the claims 1 to 8, **characterized in that** the motor (17) and the compressor (18) of the compressor assembly (10) are enclosed in a single gas-tight casing (23) such that the motor (17) and compressor (18) are sharing a single common rotor (11), which is made of one piece of a material.

10. The compressor assembly (10) according to any of the claims 1 to 8, **characterised in that** at least two of the parts (14a, 14b, 14c, 14d) each comprise a sensor (22) for sensing the distance of the rotor (11) from the active magnetic bearing (14) in one direction.

11. The compressor assembly (10) according to claim 9, **characterised in that** the sensors (22) selectively positioned on each of the at least two parts (14a, 14b, 14c, 14d) of the active magnetic bearing (14) provides an output signal indicative of the radial displacement of the rotor (11) along the axis (16) of rotation.

12. The compressor assembly (10) according to any of the claims 1 to 10, **characterised in that** a control signal is determined for the active magnetic bearing (14) to control the magnetic power to counteract the radial deflections of the rotor (11).

13. The compressor assembly according to any of the claims 1 to 11, **characterized in that** the AMB is located within a region (24) centered in the middle between the two axial end sections (13), wherein the region (24) has a length along the axis (16) of the rotor (11) of one third of the distance between both axial end sections (13).

14. The compressor assembly according to any of the claims 1 to 12, **characterised in that** the at least two parts (14a, 14b, 14c, 14d) of the active magnetic bearing (14) is made from a low friction and a corrosion resistant material.
